(19) **Europäisches Patentamt**

**European Patent Office**

**Office européen des brevets**

(11) **EP 1 104 453 B1**

(12) **EUROPEAN PATENT SPECIFICATION**

(45) Date of publication and mention
of the grant of the patent:
**10.11.2004 Bulletin 2004/46**

(51) Int Cl.⁷: **C12C 3/08**

(86) International application number:
**PCT/GB1999/002601**

(21) Application number: **99940296.9**

(22) Date of filing: **09.08.1999**

(87) International publication number:
**WO 2000/009647 (24.02.2000 Gazette 2000/08)**

(54) **HYDROGENATION OF HOP ACIDS**

HYDRIERUNG VON HOPFENSÄUREN

HYDROGENATION D'ACIDES DU HOUBLON

(84) Designated Contracting States:
**AT BE CH CY DE DK ES FI FR GB GR IE IT LI LU
MC NL PT SE**
Designated Extension States:
**SI**

(30) Priority: **13.08.1998 GB 9817682**

(43) Date of publication of application:
**06.06.2001 Bulletin 2001/23**

(73) Proprietor: **English Hop Products Ltd.
Tonbridge, Kent TN12 6DQ (GB)**

(72) Inventors:
• **HILL, Colin Anthony
Chatham, Kent ME4 6QJ (GB)**
• **MULLER, Adam
96450 Coburg (DE)**
• **SWIDERSKY, Peter
96450 Coburg (DE)**

(74) Representative: **Blake, John Henry Francis
Brookes Batchellor
1 Boyne Park
Tunbridge Wells Kent TN4 8EL (GB)**

(56) References cited:
**WO-A-97/38955**          **US-A- 5 600 012**
**US-A- 5 767 319**

## Description

This invention is concerned with the hydrogenation of hop acids, and in particular the hydrogenation of iso-$\alpha$-acids (isohumulones) to tetrahydro-iso-$\alpha$-acids (tetrahydroisohumulones).

Tetrahydroiso-$\alpha$-acids are established in the brewing industry as potent bittering and foam-stabilizing agents. They are conveniently manufactured by catalytic hydrogenation of aqueous and alcohol solutions of iso-$\alpha$-acids (Brown *et al*, Chemistry of Hop Constituents, Part XII, J. Chem.Soc (1959) p. 545-551). Iso-$\alpha$-acids are obtainable by heat treatment of $\alpha$-acids, carrying out the isomerisation *in situ* in pelletised hops (see for example GB-A-2,213,163) or after extraction from hops.

Hop acids may be extracted from hops using liquid carbon dioxide or super-critical carbon dioxide (see for example GB-A-2,119,399). Also it has been proposed to carry out reactions involving hydrogenation of certain functional groups in organic compounds by carrying out the reaction in super-critical fluids (see for example, catalytic aminations in WO 97/38955).

US-A-5 767 319 discloses the preparation of tetrahydro-iso-alfa-acids by hydrogenating an ethanol solution of a magnesium salt of the iso-alpha-acid in the presence of hydrogen and palladium on carbon catalyst (Pd/C).

WO 97 38955 A discloses a process for the selective hydrogenation of a large group of functional groups in organic compounds in a continuous flow by using carbon dioxide as substrate solvent.

The present invention aims to overcome problems associated with conventional manufacturing production of tetrahydro-isohumulones: such as low yield; production of a product with tendency to precipitate out during ambient storage; the need to use flammable solvents, or if flammable solvents are not being used, the need to carry out the process at high dilution; and high catalyst cost due to fouling of the catalyst by hop resin components.

This invention is based on the discovery that isomerised hop acids are soluble in super-critical carbon dioxide and that the unsubstituted side chains of hop acids can be hydrogenated effectively and without hydrogenolysis of the acids by carrying out the hydrogenation in super-critical carbon dioxide; also that tetrahydro product can be obtained at high yield, with only negligible amounts of dihydro products.

Accordingly, the present invention provides a process for preparing hydrogenated hop acids suitable for use in brewing in which hydrogen is admixed with a solution of hop acids in the presence of a noble metal catalyst, characterised in that carbon dioxide is used as the solvent.

The hydrogenation may be carried out as a batch process or as a continuous flow system, the latter being preferable for commercial scale production. In a continuous flow system the hydrogenation mixture may be passed over or through a catalyst bed.

Typically, the hydrogenation is used to convert iso-$\alpha$-acids to tetrahydro-iso-$\alpha$-acids. However, the same procedure may be used to hydrogenate the unsaturated side chains of other hop acids such as alpha-acids (humulones) and rho-iso-$\alpha$-acids or conversion of dihydro-iso-$\alpha$-acids to tetrahydro-iso-$\alpha$-acids. Rho-iso-$\alpha$-acids are a useful starting material for the preparation of hexahydro-iso-$\alpha$-acids.

The process of this invention is especially suitable for achieving substantially 100% conversion of iso-$\alpha$-acids to tetrahydro-iso-$\alpha$-acids. However, by adjustment of the relative amounts of starting material and hydrogen, catalyst content and catalyst contact time, production of dihydro-acids or mixtures of acids of different degrees of hydrogenation may be obtained. Depending on the brewers requirements for bittering and foaming properties, in some situations a blend of dihydro and tetrahydro-iso-$\alpha$-acids is desirable. It will be appreciated that natural hop acids are a mixture of homologues with varying acyl side chains, such as iso-butyl, iso-propyl and sec-butyl, and so as is customary in this field references to $\alpha$-acids etc. include all the relevant homologues.

Noble metal catalysts conventionally used for hydrogenation of hop acids may be used in the present process. Palladium is especially suitable for the preparation of tetrahydro-iso-$\alpha$-acids, and is typically used as from 5% - 10% palladium supported on carbon, or supported on alumina, silica or a zeolite. Platinum is also suitable.

Advantageously, the process is operated with the hop acids dissolved in supercritical carbon dioxide. To ensure the carbon dioxide is in the super-critical state, the process is operated at a pressure greater than 73 bar and a temperature above 31°C.

Normally, the pressure will not exceed 1000 bar, and is typically in the range of 150 to 500, especially 200 to 350 bar. The temperature is suitably in the range of 31 to 100°C. Preferably the temperature is above 40°C and typically between 75 and 90°C.

In the above pressure range it has been found effective to add hydrogen to a partial pressure of 20 bar when preparing tetrahydro hop acids in a batch process. The hop acids are typically present in solution at a loading of about 2.5 - 5% wt/vol. To increase the loading of hop acids, it may be necessary to increase the pressure of the system to ensure full solution.

In a continuous process, the hydrogen partial pressure and hop acid loading are suitably adjusted depending on flow rates, catalyst activity and throughput, etc. to minimise the amount of unconsumed hydrogen and hop acids when the hydrogenation product is recovered.

The hydrogenated product may be recovered by depressurising a batch system, or in a continuous flow system by evaporating carbon dioxide for recirculation, first bringing the solution sub-critical in a supercritical system.

In the following description the process of this invention is illustrated, by way of example only, wuth referemce to Examples and the accompanying drawings.

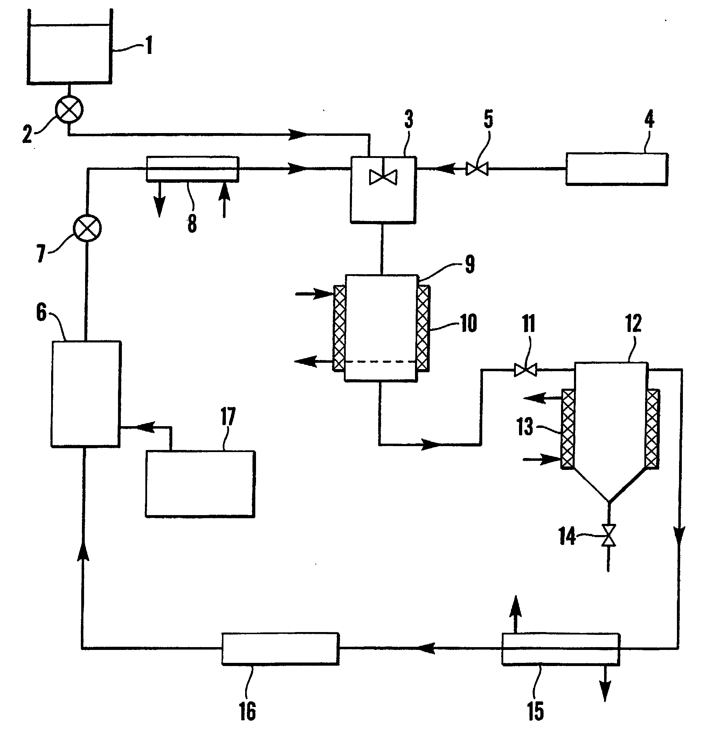

In the drawings, the single Figure is a schematic diagram of a continuous flow hydrogenation system suitable for use with the present invention.

In Examples A, B, and C, hydrogenation experiments were carried out batchwise using a 182 ml autoclave equipped with sight glass windows and a stirrer. Pure isohumulones and catalyst were loaded into the autoclave in quantities mentioned below. The autoclave was pre-pressurized to 20 bar with hydrogen gas and then pressurized to about 205 bar with carbon dioxide gas. To assess the progress of the reaction, samples were taken at regular intervals via a valved sampling port, dissolved in ethanol, and analysed using HPLC. Occasionally it was necessary to reintroduce carbon dioxide to maintain pressure due to pressure loss as a result of sample removal, and as a result the pressure varied between 200 and 220 bar during the tests.

**Example A**

The autoclave was loaded with 5g of isohumulone and 0.5g of a catalyst consisting of 10% palladium on carbon. The reaction was allowed to proceed at a temperature of about 40°C with the stirrer being switched on after 24 minutes. After 100 minutes, analysis revealed that 100% conversion of isohumulone to tetrahydro-isohumulone had taken place.

**Example B**

Example A was repeated but with the amount of isohumulones increased to 10g. The stirrer was switched on after 35 minutes. After 160 minutes the reaction mixture consisted of approximately 80% tetrahydro-isohumulone, 10% dihydro-isohumulone and 10% isohumulone.

**Example C**

Example B was repeated with the temperature increased to 75°C, starting the stirrer at 35 minutes. After 80 minutes 100% conversion of isohumulone to tetrahydro-isohumulone was achieved. Unlike the previous two Examples, the monitoring of the reaction showed that very little dihydro-isohumulone was produced in the course of the reaction.

Further tests were carried out using an experimental continuously operated flow-reactor. HPLC pumps were used to pump the solvent (carbon dioxide) and the starting material to the reactor. In this experimental apparatus it was necessary to dissolve the starting material into ethanol in order to be able to pump it with a HPLC pump. Hydrogen was flowed into the reactor through a control valve. The reactor consisted of two 8 mm diameter HPLC tube in series. The first one was packed with silica (Grace silica 432), and was used as a heater and static mixer. The second tube contained the catalyst. After the reactor the pressure was reduced to atmospheric pressure in a back pressure regulator. Samples were taken after the back pressure regulator. A dry gas meter and a rotameter were used to measure the gas flow.

Carbon dioxide, feed, and hydrogen mass-flow rates were calibrated before the experiment, and hydrogen flow rate was checked after each experiment by stopping the carbon dioxide and feed pumps, and measuring the hydrogen flow rate by the rotameter. The reaction temperature is the outside reactor wall temperature. Because the temperature did not increase during the experiments, it was assumed that the temperature in the catalyst bed was the same as the wall temperature.

At the beginning of the experiment the reactor was packed with the catalyst, and the reactor was heated to the selected reaction temperature. The system was next pressurized with carbon dioxide, and the carbon dioxide pump was turned on to reach the selected experimental pressure and allowing carbon dioxide flow through the reactor. The catalyst was then activated by allowing hydrogen gas flow through the catalyst bed. The activation typically lasted 30 minutes. Finally, the feed pump was turned on to feed the isoalpha acid to the reactor. The feed stream contained 60 wt% ethanol and 40 wt% isoalpha-acid extract. During each run three samples were collected.

Two types of commercial catalyst were used:

(a) Palladium on zeolite (Pd/SAP) contained 2 wt% palladium
(b) Palladium on carbon (Pd/C) contained 10 wt% palladium and 60 wt% water.

The experimental parameters are presented in Table 1.

Table 1

| Run No. | p (bar) | T (°C) | $F_{CO2}$ (g/h) | $F_{H2}$ (g/h) | $F_{FEED}$ (g/h) | CT | $CA_{Pd}$ (g) | t (min) | $t_r$ (min) |
|---|---|---|---|---|---|---|---|---|---|
| 1 | 180 | 75 | 160 | 0.5 | 13 | Pd/SAP | 0.06 | 45 | 0.6 |
| 2 | 180 | 100 | 160 | 0.5 | 16 | Pd/SAP | 0.06 | 110 | 0.6 |
| 3 | 180 | 80 | 160 | 0.5 | 15 | Pd/C | 0.18 | 135 | 0.6 |

**p** is the hydrogenation pressure, **T** is the hydrogenation temperature, $F_{CO2}$ is carbon dioxide mass flow-rate, $F_{H2}$ is hydrogen mass flow-rate, $F_{FEED}$ is the feed stream mass flow-rate, **CT** is the catalyst type, $CA_{Pd}$ is the amount of palladium in the reactor, **t** is the run time, and $t_r$ is the calculated residence time in the reactor. The porosity $\phi$ of the catalyst bed was estimated to be 0.5. The residence time was calculated as follows:

$$t_r = \frac{\phi * V}{F_T}$$

where V is the volume of the reactor tube, and $F_T$ is the volumetric flow rate of the carbon dioxide, hydrogen and the feed together at reaction conditions.

The results of flow reactor experiments are presented in Table 2, showing the analysis of samples after hydrogenation.

Table 2

| Sample No. | Iso/ dihydroisoalphaacids (wt%) | Tetrahydroisoalphaacids (wt%) | Iso+Dihydro + Tetra (wt%) | Conversion (%) |
|---|---|---|---|---|
| 1.1 | 11.2 | 17.4 | 28.6 | 60.9 |
| 1.2 | 20.7 | 35.0 | 55.7 | 62.8 |
| 1.3 | 22.8 | 29.9 | 52.7 | 56.7 |
| 2.1 | 3.8 | 70.0 | 73.8 | 94.8 |
| 2.2 | 5.8 | 67.0 | 72.8 | 92.1 |
| 2.3 | 10.8 | 59.7 | 70.5 | 84.7 |
| 3.1 | 23.6 | 2.6 | 26.2 | 9.8 |
| 3.2 | 7.9 | 57.1 | 65.0 | 87.8 |
| 3.3 | 2.5 | 63.4 | 68.9 | 96.4 |

The samples were analysed by HPLC.

The experiments showed that hydrogenation of iso-alpha-acids in a flow-reactor using supercritical carbon dioxide as a solvent at 180 bar and 80-100°C was successful. According to the best results, over 95 % of the initial amount of isoalpha-acids was selectively hydrogenated to tetrahydroisoalpha-acids.

The experiments carried out with Pd/SAP catalyst showed a slight sign of catalyst deactivation over the time, whereas in the case of Pd/C the activity of the catalyst seemed to increase. This could indicate, that active carbon is a better support material than zeolite for this system. However, the amount of palladium in Pd/C catalyst was three times the amount of palladium in Pd/SAP catalyst, which means that Pd/C catalyst should be active longer than PD/SAP catalyst.

In the above Examples, laboratory scale batch and flow processes were used to establish the efficacy of the process. In commercial production of hydrogenated hop acids, a continuous flow system is preferred. The single Figure of the accompanying drawings shows, by way of example only, a schematic drawing of a continuous flow system designed for hydrogenation of hop acids.

In the process illustrated hop acids (typically isohumulones) are fed by a metering pump **2** from a raw material feed vessel **1** to a mixer **3**. Pressurised hydrogen is also fed to the mixer **3** form a supply tank **4** via control valve **5**. Carbon dioxide is also fed to the mixer **3** from a holding tank **6** by a metering pump **7** and via a heater **8**. The gases are supplied under pressure and temperature conditions which dissolve the hop acids; and preferably so as to result in the carbon dioxide being in a super-critical condition. The temperature of the mixture is controlled by the temperature of the main constituent of the mixture, the carbon dioxide, as it passes through heater **8** on route to the mixer **3**.

From the mixer **3** the reaction mixture is fed to a reactor **9** containing the selected catalyst, typically palladium or carbon. The catalyst may be, for example, a bed of granular catalyst supported on a grid, or a channelled catalyst and so through which the reaction mixture is directed. The reactor **9** is provided with a heat exchange jacket **10** to control the reaction conditions, for example, heating the reactor at the beginning of the reaction and cooling it to maintain the desired temperature as the reaction proceeds. If desired, for example to increase reactor residence time or throughput of components, more than one reactor may be provided, in series or in parallel.

From the reactor **9** the mixture containing hydrogenated product passes through a pressure reduction valve **11** into a separator **12** provided with a heated jacket **13**, where under sub-critical conditions carbon dioxide is evaporated from the reaction mixture. This allows the hydrogenated product and unconsumed starting material to be recovered from the separator **12** through valve **14**. Evaporated carbon dioxide is fed via a cooler **15** to a recovery unit **16**.

In the recovery unit **16**, any unconsumed hydrogen is stripped from the carbon dioxide, and recovered. The carbon dioxide is returned to the holding tank **4**, which is topped up as necessary to make up any solvent loss from a bulk storage tank **17**. The carbon dioxide is then available for recirculation back to the mixer **3**, to continue the reaction cycle with fresh input of reactants.

**Claims**

1. A process for preparing hydrogenated hop acids suitable for use in brewing in which hydrogen is admixed with a solution of hop acids in the presence of a noble metal catalyst, **characterised in that** carbon dioxide is used as the solvent.

2. A process according to claim 1 in which carbon dioxide, hydrogen, hop acids and catalyst are batch-loaded into a reactor.

3. A process according to claim 1 in which a continuous flow of the mixture of hydrogen and carbon dioxide with dissolved hop acids is passed through or over a bed of the catalyst.

4. A process according to claim 3 in which carbon dioxide, hydrogen and hop acids are blended in a mixer, and the mixture is passed through a reactor containing the catalyst.

5. A process according to any preceding claim in which the catalyst is palladium.

6. A process according to any preceding claim in which the hydrogenation is carried out at 73-1000 bar.

7. A process according to claim 6 in which the hydrogenation is carried out at 150 - 500 bar.

8. A process according to any preceding claim in which the hydrogenation is carried out at a temperature of 31-100°C.

9. A process according to claim 8 in which the hydrogenation is carried out at a temperature of 75 - 90°C.

10. A process according to any preceding claim in which iso-$\alpha$-acids are converted to dihydroiso-$\alpha$-acids or tetrahydroiso-$\alpha$-acids or a mixture thereof.

11. A process according to any preceding claim in which dihydro-iso-$\alpha$-acids are converted to tetrahydroiso-$\alpha$-acids.

12. A process according to any preceding claim in which $\alpha$-acids are converted to tetrahydro-$\alpha$-acids or dihydro-$\alpha$-acids or a mixture thereof.

13. A process according to any preceding claim in which rho-iso-$\alpha$-acids are converted to hexahydroiso-$\alpha$-acids.

**Patentansprüche**

1. Verfahren zur Herstellung von hydrierten Hopfensäuren, die zur Verwendung beim Brauen geeignet sind, bei welchem Wasserstoff mit einer Lösung von Hopfensäuren in Gegenwart eines Edelmetallkatalysators gemischt wird, **dadurch gekennzeichnet, dass** Kohlendioxid als Lösungsmittel verwendet wird.

2. Verfahren nach Anspruch 1, worin Kohlendioxid, Wasserstoff, Hopfensäuren und Katalysator chargenweise in einen Reaktor geladen werden.

3. Verfahren nach Anspruch 1, worin ein kontinuierlicher Fluss des Gemischs aus Wasserstoff und Kohlendioxid mit gelösten Hopfensäuren durch oder über ein Katalysatorbett geleitet wird.

4. Verfahren nach Anspruch 3, worin Kohlendioxid, Wasserstoff und Hopfensäuren in einem Mischer gemischt werden und das Gemisch durch einen den Katalysator enthaltenden Reaktor geleitet wird.

5. Verfahren nach einem der vorhergehenden Ansprüche, worin der Katalysator Palladium ist.

6. Verfahren nach einem der vorhergehenden Ansprüche, worin die Hydrierung bei 73-1000 bar durchgeführt wird.

7. Verfahren nach Anspruch 6, worin die Hydrierung bei 150-500 bar durchgeführt wird.

8. Verfahren nach einem der vorhergehenden Ansprüche, worin die Hydrierung bei einer Temperatur von 31-100°C durchgeführt wird.

9. Verfahren nach Anspruch 8, worin die Hydrierung bei einer Temperatur von 75-90°C durchgeführt wird.

10. Verfahren nach einem der vorhergehenden Ansprüche, worin Iso-$\alpha$-Säuren in Dihydro-iso-$\alpha$-Säuren oder Tetrahydro-iso-$\alpha$-Säuren oder ein Gemisch davon überführt werden.

11. Verfahren nach einem der vorhergehenden Ansprüche, worin Dihydro-iso-$\alpha$-Säuren in Tetrahydro-iso-$\alpha$-Säuren überführt werden.

12. Verfahren nach einem der vorhergehenden Ansprüche, worin $\alpha$-Säuren in Tetrahydro-$\alpha$-Säuren oder Dihydro-$\alpha$-Säuren oder ein Gemisch davon überführt werden.

13. Verfahren nach einem der vorhergehenden Ansprüche, worin Rho-iso-$\alpha$-Säuren in Hexahydro-iso-$\alpha$-Säuren überführt werden.

**Revendications**

1. Procédé servant à préparer des acides de houblon hydrogénés convenant pour une utilisation en brassage dans lequel on mélange de l'hydrogène avec une solution d'acides de houblon en présence d'un catalyseur en métal noble, **caractérisé en ce qu'**on utilise du dioxyde de carbone comme solvant.

2. Procédé selon la revendication 1 dans lequel on introduit le dioxyde de carbone, l'hydrogène, les acides de houblon et le catalyseur en charges discontinues dans un réacteur.

3. Procédé selon la revendication 1 dans lequel on fait passer un flux continu du mélange d'hydrogène et de dioxyde de carbone avec des acides de houblon dissous dans ou sur un lit du catalyseur.

4. Procédé selon la revendication 3 dans lequel on mélange du dioxyde de carbone, de l'hydrogène et des acides de houblon dans un mélangeur et on fait passer le mélange dans un réacteur contenant le catalyseur.

5. Procédé selon l'une quelconque des revendications précédentes dans lequel le catalyseur est le palladium.

6. Procédé selon l'une quelconque des revendications précédentes dans lequel on effectue l'hydrogénation à 73-1000 bar.

7. Procédé selon la revendication 6 dans lequel on effectue l'hydrogénation à 150-500 bar.

8. Procédé selon l'une quelconque des revendications précédentes dans lequel on effectue l'hydrogénation à une température de 31-100°C.

9. Procédé selon la revendication 8 dans lequel on effectue l'hydrogénation à une température de 75-90°C.

10. Procédé selon l'une quelconque des revendications précédentes dans lequel les iso-$\alpha$-acides sont convertis en dihydroiso-$\alpha$-acides ou en tétrahydroiso-$\alpha$-acides ou en un mélange de ceux-ci.

11. Procédé selon l'une quelconque des revendications précédentes dans lequel les dihydroiso-$\alpha$-acides sont convertis en tétrahydroiso-$\alpha$-acides.

12. Procédé selon l'une quelconque des revendications précédentes dans lequel les $\alpha$-acides sont convertis en tétrahydro-$\alpha$-acides ou en dihydro-$\alpha$-acides ou en un mélange de ceux-ci.

13. Procédé selon l'une quelconque des revendications précédentes dans lequel les rho-iso-$\alpha$-acides sont convertis en hexahydroiso-$\alpha$-acides.